# EUROPÄISCHE PATENTSCHRIFT

(11) **EP 1 886 903 B1**
(45) Veröffentlichungstag und Bekanntmachung des Hinweises auf die Patenterteilung: **21.04.2010**
(21) Anmeldenummer: 07013961.3
(22) Anmeldetag: 17.07.2007
(51) Int. Cl.: B62D 25/14

(54) **Bauteil für einen Träger eines Fahrzeugs**
Component for a motor vehicle support
Composant pour un support de véhicule automobile

(30) Priorität: 08.08.2006 DE 102006037303
(43) Veröffentlichungstag der Anmeldung: 13.02.2008
(73) Patentinhaber: Behr GmbH & Co. KG, 70469 Stuttgart (DE)
(72) Erfinder: Wolf, Walter, 71570 Oppenweiler-Zell (DE); Derleth, Martin, 97453 Schonungen (DE); Feith, Thomas, 70825 Korntal-Münchingen (DE); Schmitz, Jochen, 71229 Leonberg (DE); Merkle, Christian, 71576 Burgstetten (DE); Binder, Georg, 70195 Stuttgart (DE); Masur, Silvio, 70199 Stuttgart (DE)

(56) Entgegenhaltungen:
- WO-A-02/20334
- WO-A-2005/032866
- WO-A-2005/035285
- US-A1- 2003 122 404

## Beschreibung

Die Erfindung betrifft ein Bauteil für einen Träger eines Fahrzeugs, insbesondere für einen Querträger.

Zur Aufnahme einer Heizungs- und/oder Klimaanlage im Fahrzeug ist üblicherweise im Bereich zwischen den A-Säulen Träger oder ein anderes starres Bauteil vorgesehen, in welche ein Luftführungskanal integriert ist und an welchem darüber hinaus weitere Funktionsbauteile, wie z. B. eine Instrumententafel, ein Airbag angeordnet sind.

Derartige Bauteile sind beispielsweise aus der DE 100 64 522 A1, WO 20051035285 A1, WO 2005/032866 A1 oder der WO 2005/085046 A1 WO2/20334 bekannt. Beispielsweise ist das bekannte Bauteil als ein Leichtbauteil aus zwei gefügten Halbschalen, insbesondere Metallschalen gebildet, die beispielsweise mit Kunststoff zur Bildung des Luftführungskanals ausgekleidet sind.

Die aus dem Stand der Technik bekannten Bauteile weisen eine unzureichende Steifigkeit und Festigkeit auf. Darüber hinaus lassen die bekannten Bauteile noch Wünsche offen, insbesondere im Hinblick auf die Anzahl der Teile und die damit in Verbindungen stehenden hohen Herstellungskosten sowie dem großen Bauraumbedarf.

Der Erfindung liegt daher die Aufgabe zugrunde, ein verbessertes Bauteil für einen Träger zur Verfügung zu stellen, welches besonders platz- und bauraumsparend mit einer hohen Steifigkeit und Festigkeit ausgebildet ist.

Die Aufgabe wird erfindungsgemäß gelöst durch die Merkmale des Anspruchs 1.

Vorteilhafte Weiterbildungen sind Gegenstand der Unteransprüche.

Erfindungsgemäß ist ein Bauteil, insbesondere Verbundbauteil für einen Träger eines Fahrzeugs, vorgesehen, das einen als Hohlkörper ausgebildeten Grundkörper umfasst, der mit mindestens einer Öffnung versehen ist, wobei im Bereich des Öffnungsrandes eine Abkantung vorgesehen ist.

Die Abkantung ist separat in Form eines L-Profils ausgebildet. Dabei erstreckt sich das L-Profil zumindest bereichsweise und im Wesentlichen entlang des Öffnungsrandes. Dies führt zu einer Steigerung der Steifigkeit und Festigkeit des Bauteils im Bereich der Öffnung. Zweckmäßigerweise ist das L-Profil form-, stoff- und/oder kraftschlüssig mit dem Grundkörper verbunden. Das L-Profil bildet als ein ein- oder angespritztes Kunststoff-Bauteil eine Versteifungsstruktur für den Grundkörper.

In einer weiteren möglichen Ausführungsform ist die Öffnung in mindestens zwei Teilöffnungen durch einen Steg teilbar, der zumindest bereichsweise abgekantet ist. Dabei kann der Steg selbst bereichsweise abgekantet sein. Beispielsweise ist der Rand des Steges nach außen abgewinkelt ausgebildet. Alternativ kann am Rand des Steges ein L-Profil angeordnet sein.

Vorzugsweise sind mehrere Öffnungen entlang des Grundkörpers verteilt angeordnet sind. In einer Ausführungsform ist mindestens eine Öffnung als Strömungsöffnung zum Einlass und/oder Auslass von Luft ausgebildet. Dabei können die Öffnungen seitlich, mittig, oben und/oder unten im Grundkörper angeordnet sein. Mit anderen Worten: Bei einer Verwendung des Grundkörpers als Querträger im Bereich zwischen den A-Säulen eines Fahrzeugs und als Luftführungskanal dienen die Öffnungen der Zuführung von konditionierter Luft im Bereich der Windschutzscheibe zur Entfrostung, im Fuß- und Bodenbereich, im Font- und Frontbereich bzw. zur seitlichen Belüftung. Alternativ oder zusätzlich kann die Öffnung zur Aufnahme eines Funktionsbauteils, insbesondere einer Düse oder eines Filters, ausgebildet sein.

Zur weiteren Versteifung bzw. zur Erhöhung der Festigkeit des Grundkörpers erstreckt sich vorteilhafterweise zumindest bereichsweise entlang der Oberfläche des Grundkörpers mindestens eine separate Außenabkantung. In einer einfachen Ausführungsform ist die Außenabkantung L-förmig ausgebildet. Dabei kann die L-förmige Außenabkantung als Halter, beispielsweise für eine Lenkung oder zur Aufnahme eines anderen Moduls, z. B. eines AirbagModuls, eines Head-up-Displays, einer Audio- oder Kommunikationseinheit, einer Navigationseinheit und/oder eines Filters, dienen.

In einer möglichen Ausführungsform verläuft die Außenabkantung zumindest entlang der Quer- und/oder Längsrichtung des Grundkörpers. Für eine weitere Erhöhung der Steifigkeit und/oder Festigkeit des Grundkörpers kann die Außenabkantung schräg zur Quer- oder Längsrichtung verlaufen. Verläuft der Grundkörper neben der Querrichtung und der Längsrichtung auch in Vertikalrichtung nach oben und nach unten, so kann die Außenabkantung auch im Bereich der Vertikalachse des Grundkörpers an dessen Außenoberfläche zur Steifigkeitserhöhung angeordnet sein.

Zur Bildung einer weitgehend steifen Hohlstruktur ist der Grundkörper aus mindestens zwei Teilen, insbesondere zwei Halbschalen gebildet, die Hohlräume bilden. Die zwei Halbschalen sind beispielsweise U-Schalen oder eine andere Schalenform. Für eine hinreichend gute Festigkeit ist der Grundkörper aus einem Material mit hohem E-Modul, insbesondere aus einem Metall, z. B. aus Aluminium, Magnesium, Stahl, Titan oder auch aus einem Composit-Material, z. B. einem Kunststoff-Kunststoff-Hybrid gebildet. Vorzugsweise ist der Grundkörper als ein Fertigbauteil, insbesondere ein separates vorgefertigtes Bauteil ausgeführt, welches beispielsweise zusätzlich zumindest teilweise mit Kunststoff ausgekleidet ist. Hierdurch wird der Grundkörper nochmals versteift und gefestigt. D.h. die Kunststoffbauteile übernehmen eine tragende und versteifende Funktion.

Eine weitere alternative Ausführungsform zur Verstärkung der Hohlstruktur des Grundkörpers sieht vor, dass zumindest einer der Teile des Grundkörpers, d.h. eine der Halbschalen, bereichsweise wellenförmig ausgebildet ist. Eine derartige Versteifungswelle trägt beispielsweise bei einer Anordnung im Bereich der A-Säule zur Verstärkung der Hohlstruktur der Auslassöffnung bei. Zudem ermöglicht eine derartige wellenförmige Wandstruktur eine weitgehend homogene Strömungsführung.

Zweckmäßigerweise sind die zwei Teile des Grundkörpers in der YZ-Ebene oder in der YX-Ebene form-, stoff und/oder kraftschlüssig miteinander verbunden. D.h. der Grundkörper erstreckt sich wenigstens quer zur Fahrrichtung (= Y-Achse) über die gesamte Fahrzeugbreite. Darüber hinaus erstreckt sich der Grundkörper zumindest teilweise in Z-Richtung nach oben oder nach unten. In Fahr- oder negative X-Richtung entspricht die Ausdehnung in etwa dem Querschnitt der Hohlstruktur. Bei einer Ausführung des Grundkörpers als Hybrid- oder Verbundbauteil, werden die zwei Teile miteinander verklebt, geclipst, oder in anderer geeigneter Weise zusammengefügt. Hierbei kann eine Metallschale durch ein Kunststoffteil zu einem Hohlkörper ergänzt werden. Weitere Alternativen für Hybride oder Verbundbauteile können sein:
Zwei Blechschalen bilden durchgängig von der Fahrerseite zur Beifahrerseite einen geschlossen Hohlkörper;
Eine Blechschale ist durchgängig von der Fahrerseite zur Beifahrerseite ausgeführt und wird auf der Fahrerseite durch eine zweite Schale zu einem geschlossen Hohlkörper ergänzt, wobei auf der Beifahrerseite lediglich ein Kunststoffkörper vorgesehen ist.

Bei einer weiteren Variante liegt auf der Fahrerseite eine geschlossene Struktur aus Metall vor und auf der Beifahrerseite eine Struktur aus Kunststoff oder als Hybrid. Weitere sinnvolle Kombinationen sind denkbar. Beispielsweise können bei einem Kunststoffbauteil die Kunststoffteile nach dem Spritzgießverfahren mechanisch an dem Blechteil gefügt sein. Hierbei besitzt das Blechteil z.B. so genannte Kragen (ringförmige Durchzüge mit Hinterschnitt). Mit Hilfe von Stempeln werden die Kunststoffteile mit den Durchzügen verbunden. Nach demselben Verfahren, oder auch nach anderen bekannten Verfahren, können auch die L-förmigen Verstärkungen um die Öffnungen und andere Verstärkungen angebracht werden. Ebenso können bei einem metallischen Grundkörper dessen Teile auch mechanisch gefügt werden.

Vorzugsweise wird das Bauteil als Querträger für ein Fahrzeug verwendet. Somit übernimmt das Bauteil sowohl tragende als auch die Klimatisierung betreffende Funktionen.

Ausführungsbeispiele der Erfindung werden anhand einer Zeichnung näher erläutert. Darin zeigen:
- Fig. 1: schematisch eine perspektivische Ansicht eines Bauteils für einen Querträger mit mehreren Öffnungen, deren Öffnungsrand zur Bildung einer Abkantung abgekantet ist,
- Fig. 2: schematisch eine weitere Ausführungsform für ein Bauteil mit einer durch einen Steg geteilten Öffnung,
- Fig. 3: schematisch einen Teilbereich eines Bauteils im Bereich einer Öffnung mit einer separaten Außenabkantung,
- Fig. 4: schematisch eine Draufsicht auf ein Bauteil mit einer als Halter dienenden Außenabkantung,
- Fig. 5: schematisch einen Teilbereich eines Bauteils im Bereich einer A-Säulenanbindung mit einer wellenförmigen Wandstruktur,
- Fig. 6: schematisch eine weitere mögliche Ausführungsform für ein Bauteil in Draufsicht mit einer Kröpfung im Querverlauf,
- Fig. 7: schematisch ein weiteres alternatives Bauteil mit in mindestens eine Öffnung einsteckbaren Funktionsbauteilen.

Einander entsprechende Teile sind in allen Figuren mit den gleichen Bezugszeichen versehen.

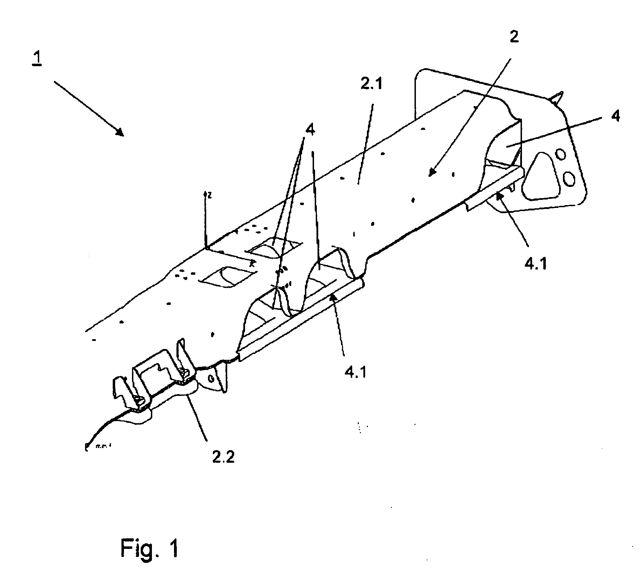

Figur 1 zeigt ein Bauteil 1 für einen Träger eines Fahrzeugs. Das Bauteil 1 umfasst einen Grundkörper 2. Der Grundkörper 2 erstreckt sich dabei in wenigstens zwei Ausrichtungen in X-Richtung und Y-Richtung. Unter X-Richtung wird die Ausrichtung des Grundkörpers 2 entlang der Fahrzeuglängsachse, unter Y-Richtung entlang der Fahrzeugquerachse verstanden. Auch kann sich der Grundkörper 2 in Z-Richtung entlang der Vertikalachse nach oben oder nach unten erstrecken.

Bevorzugt erstreckt sich der Grundkörper 2 in Querrichtung des Fahrzeugs und ist als Querträger zwischen den A-Säulen des Fahrzeugs angeordnet. Der Grundkörper 2 dient nicht nur als tragende Struktur. Durch Integration von Luftführungskanälen, Düsen und/oder Klimaanlagenmodulen in und/oder an den Grundkörper 2 wird das Bauteil 1 auch als Luftführungskanal oder als Thermo-Struktur-Modul bezeichnet.

Der Grundkörper 2 ist aus mindestens zwei Teilen 2.1, 2.2 gebildet. Die Teile 2.1 und 2.2 sind insbesondere Halbschalen, die entlang der Ausrichtung des Bauteils 1 einen Hohlraum bilden. Mit anderen Worten: Das Bauteil 1 ist als Basishohlstruktur ausgebildet, wobei die Hohlräume zur Luftführung und Luftverteilung mittels eines Luftführungskanals genutzt werden. Das Bauteil 1 folgt dabei den so genannten Kraftpfaden für ein Cockpit und erstreckt sich im Wesentlichen in Y-Richtung und darüber hinaus in X- und in Z-Richtung.

Die Trennebene der beiden Teile 2.1 und 2.2 liegt in der YX-Ebene. Alternativ kann die Trennebene in der YZ-Ebene liegen. In der Trennebene sind die beiden Teile 2.1 und 2.2 form-, Stoff- und/oder kraftschlüssig miteinander verbunden. Beispielsweise weisen die Teile 2.1 und 2.2 jeweils einen Randflansch 2.3 auf. Die aneinander liegenden Randflanschen 2.3 werden beispielsweise mechanisch und/oder thermisch gefügt, z. B. geschweißt, gelötet, genietet oder in einer anderen geeigneten Art und Weise miteinander verbunden.

Bei Verwendung des Bauteils 1 als Luftführungskanal sind entlang der Ausrichtung des Grundkörpers 2 mehrere Öffnungen 4 verteilt angeordnet. Die Öffnungen 4 dienen als Strömungsöffnungen zum Einlass und/oder Auslass von Luft. Die die Festigkeit und/oder Steifigkeit des Bauteils 1 beeinträchtigenden Öffnungen 4 weisen für eine weiterhin hinreichend hohe Steifigkeit am Öffnungsrand mindestens eine Abkantung 4.1 auf. Je nach Vorgabe kann dabei der Öffnungsrand vollständig umlaufend oder nur bereichsweise abgekantet sein.

Je nach Form der Abkantung 4.1, beispielsweise rund oder scharf, erfolgt am Strömungsauslass eine homogene Strömungsverteilung oder ein Strömungsabriss.

In Abhängigkeit vom Aufbau des Grundkörpers 2 kann die Abkantung 4.1 bei einer metallischen Ausführung des Grundkörpers 2 derart gebildet werden, dass der Öffnungsrand der Öffnung 4 selbst winklig gebogen wird. Alternativ bei einer Kunststoffausführung des Grundkörpers 2 kann die Abkantung 4.1 geformt, insbesondere gespritzt, z. B. ein- oder angespritzt, sein.

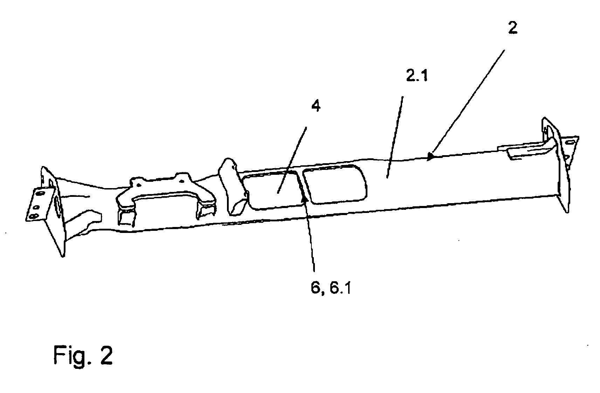

Figur 2 zeigt eine weitere Ausführungsform für ein Bauteil 1 mit einer durch einen Steg 6 geteilten Öffnung 4. Der Steg 6 ist für eine hohe Struktursteifigkeit der Öffnung 4 entlang des Stegrandes zumindest bereichsweise abgekantet. Dabei wird der Stegrand nach außen abgewinkelt, so dass sich eine abgewinkelte Kante 6.1 bildet.

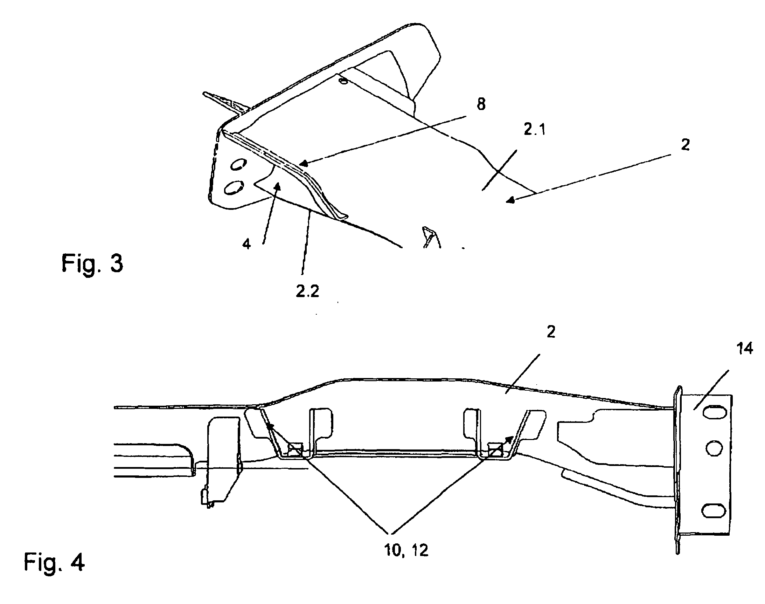

Figur 3 zeigt eine weitere alternative Ausführungsform für ein Bauteil 1 mit hoher Struktursteifigkeit. Dazu der Grundkörper 2 in einem Teilbereich, z. B. im Bereich einer Öffnung 4 eine separate Abkantung 8 auf, die in Form eines L-Profils ausgebildet ist. Das L-Profil erstreckt sich zumindest bereichsweise und im Wesentlichen entlang des Öffnungsrandes der Öffnung 4. Das L-Profil kann form-, stoff- und/oder kraftschlüssig mit dem Grundkörper 2 verbunden sein. Beispielsweise ist das L-Profil bei einer metallischen Ausführung angeschweißt oder bei einer Kunststoffausführung an- bzw. eingespritzt. Besonders eignet sich die Abkantung 8 an der Öffnung 4 eines seitlichen Ausströmers, z. B. auf der Fahrer- oder Beifahrerseite.

In Figur 4 ist eine Draufsicht auf ein Bauteil 1 mit einer als Halter 10 dienenden Außenabkantung 12 gezeigt. Die separate Außenabkantung 12 ist in Form eines auf die Oberfläche des Grundkörpers 2 angebrachten Steges ausgeführt, der für eine weitere Erhöhung der Steifigkeit anstelle der parallelen Ausrichtung zur Längs-, Quer- oder Vertikalrichtung schräg zu diesen verläuft.

Für eine einfache form-, kraft- und/oder stoffschlüssige Verbindung der Außenabkantung 12 ist diese zweckmäßigerweise L-förmig ausgebildet. Hierdurch dient ein Schenkel des L-Profils als Befestigung am Grundkörper 2, der weitere Schenkel dient als Halter 10 zur Aufnahme eines Funktionsmoduls, z. B. eines Airbagmoduls oder einer Filtereinheit.

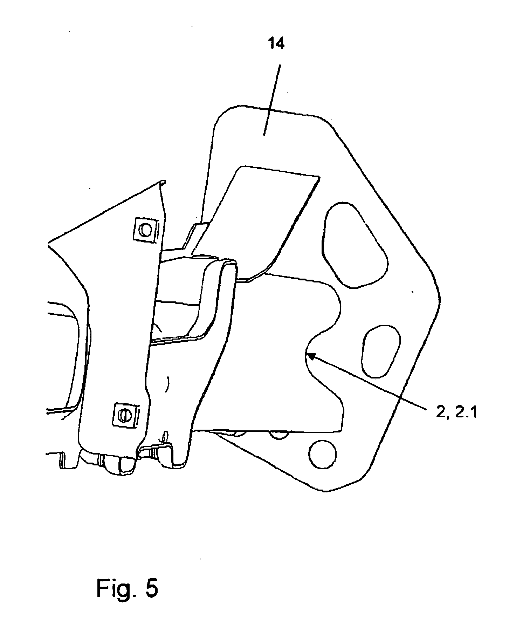

Figur 5 zeigt schematisch einen Teilbereich eines Bauteils 1 im Bereich einer A-Säulenanbindung 14. Zur Erzielung einer hohen Struktursteifigkeit weist der Grundkörper 2, insbesondere eines der Teile 2.1 bzw. 2.2 eine wellenförmige Wandstruktur 2.3 auf. Durch eine derartige Versteifungswelle weist der Grundkörper 2 eine hohe Biege- und Drucksteifigkeit auf.

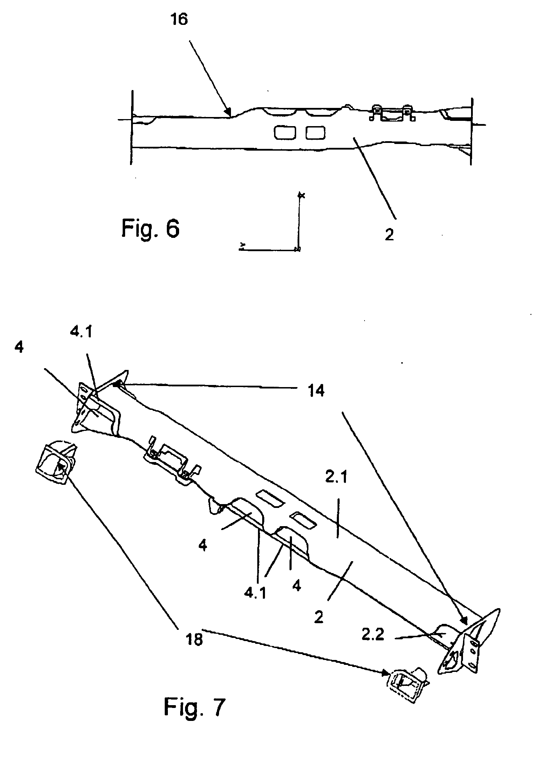

Um insbesondere bei einem als Querträger ausgeführtem Bauteil 1 eine hohe Quersteifigkeit und -festigkeit zu erzielen, kann der Grundkörper 2 des Weiteren mit einer Kröpfung 16 versehen sein, wie sie in Figur 6 schematisch dargestellt ist. Neben der Erzielung einer hohen Quersteifigkeit dient eine derartige Kröpfung darüber hinaus der bauraumsparenden Aufnahme von Funktionsmodulen, wie z. B. eines Airbagmoduls.

In Figur 7 ist schematisch ein weiteres alternatives Bauteil 1 mit in mindestens eine Öffnung 4 einsteckbaren Funktionsbauteilen 18 gezeigt. Durch die Aufnahme von Funktionsbauteilen 18 in die Öffnung 4 wird die an sich labile Öffnung 4 in der Struktur verstärkt. In Figur 7 ist beispielhaft die Aufnahme einer Düse in die Öffnung 4 gezeigt.

## Patentansprüche

1. Bauteil (1), insbesondere Verbundbauteil für einen Träger eines Fahrzeugs, umfassend einen als Hohlkörper ausgebildeten Grundkörper (2), der mit mindestens einer Öffnung (4) versehen ist, wobei im Bereich des Öffnungsrandes eine Abkantung (4.1, 8) vorgesehen ist, **dadurch gekennzeichnet, dass** die Abkantung (8) separat in Form eines L-Profils, das sich zumindest bereichsweise und im Wesentlichen entlang des Öffnungsrandes erstreckt, ausgebildet ist und das L-Profil als ein ein- oder angespritztes Kunststoff-Bauteil eine Versteifungsstruktur für den Grundkörper (2) bildet.

2. Bauteil nach Anspruch 1, wobei das L-Profil form-, stoff- und/oder kraftschlüssig mit dem Grundkörper (2) verbunden ist.

3. Bauteil nach einem der vorhergehenden Ansprüche 1 bis 2, wobei die Öffnung (4) in mindestens zwei Teilöffnungen durch einen Steg (6) teilbar ist, der zumindest bereichsweise abgekantet ist.

4. Bauteil nach einem der vorhergehenden Ansprüche 1 bis 3, wobei mehrere Öffnungen (4) entlang des Grundkörpers (2) verteilt angeordnet sind.

5. Bauteil nach einem der vorhergehenden Ansprüche 1 bis 4, wobei die Öffnung (4) als eine Strömungsöffnung zum Einlass und/oder Auslass von Luft ausgebildet ist.

6. Bauteil nach einem der vorhergehenden Ansprüche 1 bis 5, wobei die Öffnung (4) zur Aufnahme eines Funktionsbauteils (18), insbesondere einer Düse, ausgebildet ist.

7. Bauteil nach einem der vorhergehenden Ansprüche 1 bis 6, wobei zumindest bereichsweise entlang der Oberfläche des Grundkörpers (2) mindestens eine separate Außenabkantung (12) erstreckt.

8. Bauteil nach Anspruch 7, wobei die Außenabkantung (12) L-förmig ausgebildet ist.

9. Bauteil nach Anspruch 7 oder 8, wobei die Außenabkantung (12) als Halter (10) dient.

10. Bauteil nach einem der vorhergehenden Ansprüche 7 bis 9, wobei die Außenabkantung (12) zumindest entlang der Quer- und/oder Längsrichtung und/oder schräg zur Quer- oder Längsrichtung verläuft.

11. Bauteil nach einem der vorhergehenden Ansprüche 1 bis 10, wobei der Grundkörper (2) aus mindestens zwei Teilen (2.1, 2.2), insbesondere zwei Halbschalen gebildet ist, die Hohlräume bilden.

12. Bauteil nach Anspruch 11, wobei zumindest einer der Teile (2.1, 2.2) bereichsweise wellenförmig ausgebildet ist.

13. Bauteil nach Anspruch 11 oder 12, wobei die zwei Teile (2.1, 2.2) in der YZ-Ebene oder in der YX-Ebene form-, stoff- und/oder kraftschlüssig miteinander verbunden sind.

14. Verwendung eines Bauteils nach einem der Ansprüche 1 bis 13 als Querträger für ein Fahrzeug.

## Claims

1. Component (1), in particular composite component, for a structural member of a vehicle, comprising a base body (2) designed as a hollow body and provided with at least one opening (4), a fold (4.1, 8) being provided in the region of the edge of the opening, **characterised in that** the fold (8) is formed separately in the shape of an angle section extending at least in part and substantially along the edge of the opening, and **in that** the angle section, being a moulded-in or moulded-on plastic component, forms a reinforcing structure for the base body (2).

2. Component according to claim 1, wherein the angle section is positively, by adhesive force and/or non-positively joined to the base body (2).

3. Component according to claim 1 or 2, wherein the opening (4) can be divided into at least two part-openings by a web (6) which is at least in part folded.

4. Component according to any of claims 1 to 3, wherein several openings (4) are distributed along the base body (2).

5. Component according to any of claims 1 to 4, wherein the opening (4) is designed as a flow opening for the inlet and/or outlet of air.

6. Component according to any of claims 1 to 5, wherein the opening (4) is designed for the accommodation of a functional component, in particular a nozzle.

7. Component according to any of claims 1 to 6, wherein at least one separate external fold (12) extends along at least a part of the surface of the base body (2).

8. Component according to claim 7, wherein the external fold (12) is L-shaped.

9. Component according to claim 7 or 8, wherein the external fold (12) serves as a holder.

10. Component according to any of claims 7 to 9, wherein the external fold (12) extends at least along the transverse and/or longitudinal direction and/or at an angle to the transverse or longitudinal direction.

11. Component according to any of claims 1 to 10, wherein the base body (2) is made up from at least two parts (2.1, 2.2), in particular two half-shells, which form cavities.

12. Component according to claim 11, wherein at least one of the parts (2.1, 2.2) is corrugated in part.

13. Component according to claim 11 or 12, wherein the two parts (2.1, 2.2) are positively, by adhesive force and/or non-positively joined to one another in the YZ plane or in the YX plane.

14. Use of a component according to any of claims 1 to 13 as a crossmember for a vehicle.

## Revendications

1. Pièce (1), en particulier pièce composite pour un support d'un véhicule automobile, comprenant un corps de base (2) configuré comme un corps creux, corps de base qui est doté d'au moins une ouverture (4), où il est prévu un chanfrein (4.1, 8) dans la zone du bord de l'ouverture, **caractérisée en ce que** le chanfrein (8) est configuré séparément, sous la forme d'un profilé en L qui s'étend au moins partiellement et essentiellement le long du bord de l'ouverture, et le profilé en L, en tant que pièce en matière plastique moulée ou injectée, forme une structure de renfort pour le corps de base (2).

2. Pièce selon la revendication 1, où le profilé en L est assemblé avec le corps de base (2) par adaptation de forme, par continuité de matière et / ou à force.

3. Pièce selon l'une des revendications précédentes 1 ou 2, où l'ouverture (4) peut être divisée en au moins deux ouvertures partielles, par une partie pleine (6) qui est chanfreinée au moins partiellement.

4. Pièce selon l'une quelconque des revendications précédentes 1 à 3, où plusieurs ouvertures (4) sont disposées en étant réparties le long du corps de base (2) .

5. Pièce selon l'une quelconque des revendications précédentes 1 à 4, où l'ouverture (4) est configurée comme une ouverture d'écoulement pour l'entrée et / ou la sortie d'air.

6. Pièce selon l'une quelconque des revendications précédentes 1 à 5, où l'ouverture (4) est configurée pour loger une pièce fonctionnelle (18), en particulier une buse.

7. Pièce selon l'une quelconque des revendications précédentes 1 à 6, où au moins un chanfrein extérieur séparé (12) s'étend au moins partiellement le long de la surface du corps de base (2).

8. Pièce selon la revendication 7, où le chanfrein extérieur (12) est configuré en forme de L.

9. Pièce selon la revendication 7 ou 8, où le chanfrein extérieur (12) sert d'élément de retenue (10).

10. Pièce selon l'une quelconque des revendications précédentes 7 à 9, où le chanfrein extérieur (12) s'étend au moins le long de la direction transversale et / ou longitudinale et / ou en oblique par rapport à la direction transversale ou longitudinale.

11. Pièce selon l'une quelconque des revendications précédentes 1 à 10, où le corps de base (2) est formé par au moins deux parties (2.1, 2.2), en particulier par deux demi-coques qui forment des espaces creux.

12. Pièce selon la revendication 11, où au moins l'une des parties (2.1, 2.2) est configurée en ayant partiellement une forme ondulée.

13. Pièce selon la revendication 11 ou 12, où les deux parties (2.1, 2.2) sont assemblées l'une à l'autre, dans le plan YZ ou dans le plan YX, par adaptation de forme, par continuité de matière et / ou à force.

14. Utilisation d'une pièce selon l'une quelconque des revendications 1 à 13, comme traverse pour un véhicule automobile.
